# EUROPEAN PATENT APPLICATION

(11) **EP 0 646 399 A1**
(43) Date of publication of application: **05.04.1995**
(21) Application number: 93115105.4
(22) Date of filing: 20.09.1993
(51) Int. Cl.: B01D 9/00

(54) **Process for crystallizing melt with adiabatic cooling and apparatus for the same**

(71) Applicant: Tsukishima Kikai Co. Ltd., Chuo-ku Tokyo (JP)
(72) Inventor: Morita, Minoru, Tsukishima Kikai Co., Ltd., Chuo-ku, Tokyo (JP); Takegami, Keizo, Tsukishima Kikai Co., Ltd., Chuo-ku, Tokyo (JP)
(74) Representative: Hagemann, Heinrich, Dr.rer.nat., Dipl.-Chem.

(57) **Abstract**

An adiabatic evaporation and cooling of a solvent from a melt of organic chemicals containing the solvent is conducted in a crystallizer 1. Crystals which are formed by this operation is removed from the crystallizer 1 and vapor from the crystallizer 1 is introduced to an absorption condenser 2. A feed solution of the melt is introduced to the absorption condenser 2 in which it is brought into contact with the vapor to condense the vapor. The condensate is introduced to the crystallizer 1.

## Description

### BACKGROUND OF THE INVENTION

### (a) Field of the Invention

The present invention relates to a process for crystallizing a melt of organic chemicals for separation and purification and in particular to a process for crystallizing a melt of organic chemicals with adiabatic cooling using an absorption condenser and an apparatus for the same.

### (b) Description of Related Art

The process for crystallizing an organic material includes;
(1) a melt crystallization and purifying process in which crystals are removed from the melt by cooling the melt without charging a third material such as solvent into the melt;
(2) crystallization process by cooling a solution which is added with a solvent which is dissolved in the solution; and
(3) a process for cooling a two-liquid phase solution which is added with a solvent (for example, water) which is not dissolved therein.

Cooling methods for industrial crystallization are classified in view of apparatus as follows:

### (A) indirect cooling method:

A melt of organic chemicals is charged into an elongated cylindrical double walled pipe which is provided with a cooling jacket on an outer cylinder. Cooling water is circulated through the cooling jacket so that crystals are deposited on the inner wall of the pipe. The deposited crystals are scraped by scraping blades to remove them as slurry and the slurry is separated into solid (crystals) and liquid in the other side of the system.

### (B) direct cooling method:

A melt of organic chemicals is charged into a tank having an agitator and simultaneously, solvent such as water which is dissolved to the organic chemicals is poured therein. Crystallization is conducted by cooling the water while the organic chemicals are dispersed in water.

### (C) cooling method with adiabatic evaporation :

Organic chemicals are dissolved in a solvent. Adiabatic vaporization is conducted in a crystallizer. Resultant vapor is condensed in a condenser. Condensed refrigerant is returned to the crystallizer, again.

The above mentioned melt purifying process (1) has serious problems that operation temperature is elevated, operation becomes difficult and deterioration of quality of the organic chemical occurs since the organic chemicals to be crystallized are molten at high temperatures.

The indirect cooling method (A) has a disadvantage that the apparatus becomes larger in size and incorporation of a scraping machine is necessary and thus the cost of construction of the apparatus is high since the heat conduction coefficient is as low as about 200 to 500 kcal/m²·°C·hr.

The direct cooling method (B) which may be classified as the method (3) requires much cost to treat a small amount of organic chemical which may be dissolved in water.

The adiabatic evaporation and cooling method (2) using a solvent requires for a condenser to be operated at a lower condensation temperature at which condensation does not occur with usual coolant in comparison with operation temperature of the crystallizer. At this end, larger refrigerating facility is needed, resulting in a high cost of facility.

In order to adopt the adiabatic evaporation and cooling method (C), it is generally necessary for elevating the condensation temperature, increasing the pressure of vapor which is vaporized under an evacuated pressure by means of a compressor. Also in this case, operation cost of compressor is high. No compressor may be necessary depending upon the vaporization temperature and the temperature of coolant in some cases. The condensation temperature of the refrigerant may often be lower than 0°C if the vapor is to be directly condensed. If no compressor is used, brine is prepared by means of a refrigerating machine in order to carry out condensation. Accordingly, tremendously much cost for investment to facility related with refrigerating machine is necessary.

Therefore, the present inventors has proposed in Japanese Patent Application No. 3-97809 a process for crystallizing an organic chemical comprising the steps of: conducting an adiabatic evaporation and cooling operation of a refrigerant from the organic chemical containing the refrigerant which is charged into the crystallizer; removing crystals which are formed by the vaporization; introducing vapor to an absorber; condensing the vapor in the absorber by contacting it with dense liquid from a regenerator; introducing condensate liquid from the absorber to the regenerator; vaporizing the refrigerant in the regenerator; transferring the vapor to the condenser; condensing the vapor in the condenser; supplying the condensed liquid to the crystallizer and circulating the dense liquid between the absorber and the regenerator by returning to the absorber the dense liquid, the concentration of an absorbent of which is increased by the regenerator and an apparatus for the same.

In the senior art, it is necessary to separately provide three units such as absorber, regenerator and condenser for the crystallizer. This increases of facility cost and operation cost.

### SUMMARY OF THE INVENTION

It is therefore an object of the present invention to provide a process and an apparatus for crystallizing a melt of organic chemicals in which facility and operation cost is reduced.

In a first aspect of the present invention, there is provided a process for crystallizing a melt with adiabatic cooling comprising the steps of: conducting an adiabatic evaporation and cooling of a solvent from the melt of organic chemicals to be crystallized containing the solvent in a crystallizer; removing from the crystallizer, resultant slurry containing crystals which is formed by the vaporization of the solvent; introducing resultant vapor from the crystallizer to the absorption condenser; introducing to an absorption condenser feed solution of said melt of the organic chemicals to achieve absorption-condensation of the vapor by bringing the feed solution into contact with said introduced vapor therein; and introducing resultant absorbed condensate to said crystallizer.

In a second aspect of the present invention, there is provided a process for crystallizing a melt with adiabatic cooling comprising the steps of: conducting an adiabatic evaporation and cooling of a solvent to be crystallized containing the solvent in a crystallizer of organic chemicals by directly supplying the melt thereto; removing from the crystallizer, resultant slurry containing crystals which is formed by the vaporization of the solvent; separating the slurry containing crystals which is drawn out from the crystallizer into solid and liquid; introducing a part of or all of the separated mother liquid to an absorption condenser to achieve absorption condensation of the vapor by bringing it with said introduced vapor therein; and introducing resultant absorbed condensate to said crystallizer.

In a third aspect of the present invention, there is provided an apparatus for crystallizing a melt of organic chemicals comprising a crystallizer for conducting an adiabatic vaporization of a solvent which is contained in the melt of organic chemicals to be crystallized; means for drawing out the slurry containing crystals from the crystallizer which is generated by the vaporization; and an absorption condenser for condensing vapor introduced from said crystallizer by bringing the vapor into contact with introduced feed solution of said melt of the organic chemicals, whereby to re-cycle the absorbed condensate to said crystallizer.

In the present invention, the temperature for crystallization is lowered since a solvent is added. This facilitates crystallizing operation. Since crystallization can be conducted with adiabatic evaporation and cooling of a refrigerant in the crystallizer, it is not necessary to obtain cooling heat removal for crystallization with a refrigerator. Therefore, necessity for refrigerating facility is obviated. Reduction in facility and operation cost can be achieved.

When the vapor which has deprived crystallization heat and is generated in the crystallizer is condensed, an gas-liquid equilibrium between the generated vapor and the organic chemicals is kept. In this case, the vapor often vaporizes at a solvent concentration of 30 % or more. Therefore, direct condensation of the generated vapor can not be achieved unless the temperature is remarkably lower than the crystallization temperature. In order to achieve condensation, it is necessary to use a refrigerator and a colder refrigerant carrier. Alternatively, the pressure of the vapor is increased, or condensation temperature is forcedly elevated by increasing the pressure by means of a mechanical compressor. In any cases, facility and operation cost is expensive.

In contrast to this, if the vapor which is generated in the crystallizer is brought into contact with a feed solution of a melt supplied at a substantially same pressure in an absorption condenser, an elevation in condensation temperature occurs. The condensation temperature differs depending upon the solvent concentration. The condensation temperature increases by about 5 to 20°C.

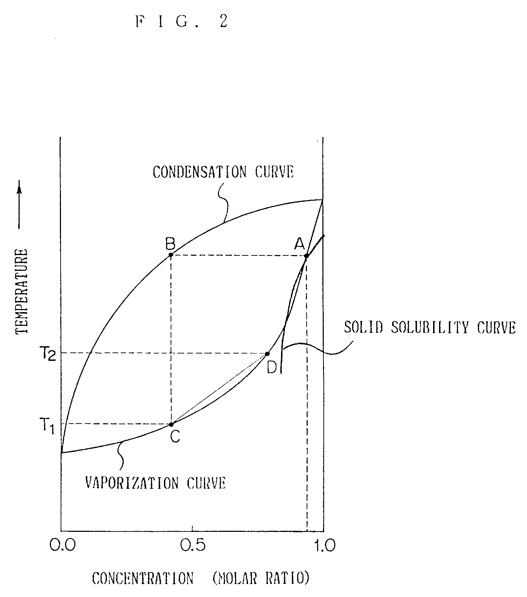

This will be described in more detail with reference to a gas-liquid equilibrium curves in Fig. 2. The solvent vaporizes at point A. Crystals are formed with the adiabatic cooling. Point B represents the compositions of the vapor closer to those at point A. Point C represents condensate when the vapor at point B is fully condensed. Ti represents the temperature which is necessary for full condensation.

If the absorption condenser of the present invention is not used, but a usual condenser is used, cold brine having a temperature which is ΔT higher than the operation temperature in a heat exchanger would be necessary.

In contrast to this, the absorbing liquid at point C can be shifted to point D by addition of a liquid having a composition closer to point A by spraying. Therefore, the solvent can be fully condensed (absorbed) at a temperature of T2 in the present invention.

As a result of this, elevation in condensation temperature (T1→T2) can be achieved. It is necessary to actually consider three components such as a desired component, impurity and solvent. However, the impurity can be presumed as being very close to the desired component in term of vapor pressure.

If the vapor which is generated in the crystallizer is brought into contact with the feed solution of a melt which is supplied at a substantially same pressure as the vapor in the absorption condenser, the condensation temperature is elevated due to elevation of boiling point so far as the concentration of the vapor does not fall in the range where crystallization occurs. Therefore, cooling operation can be conducted at a condensation temperature which is higher than the temperature of the used coolant. No special refrigerant facility nor evacuating machine is necessary.

### BRIEF DESCRIPTION OF THE DRAWINGS

Fig. 1 is a flow chart showing an embodiment of the present invention;
Fig. 2 is a graph showing the relation between the solid-liquid equilibrium temperature and the concentration of refrigerant which the present invention is applied in accordance with;
Fig. 3 is a flow chart of another embodiment;
Fig. 4 is a flow chart of a further embodiment;
Fig. 5 is a flow chart of a further embodiment;
Fig. 6 is a flow chart showing an example 1; and
Fig. 7 is a flow chart showing an example 2.

### DESCRIPTION OF PREFERRED EMBODIMENTS

The present invention will be described in more detail by way of embodiments with reference to drawings.

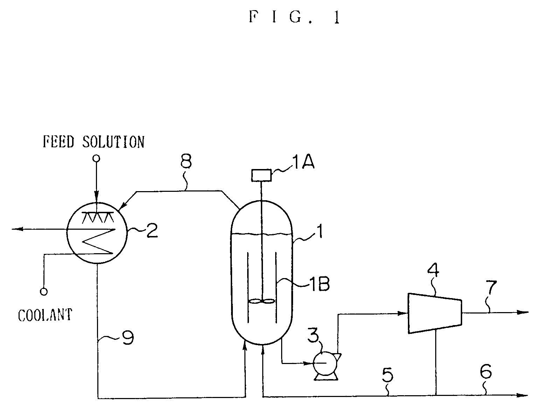

Fig. 1 shows an embodiment of the present invention. A reference numeral 1 denotes crystallizer having an agitator 1A and a draft tube 1B; 2 denotes an absorption condenser. Crystal slurry which is generated in the crystallizer 1 is introduced to a solid-liquid separator such as a centrifuge 4 or a horizontal filter via a crystal removing pump 3. Most of the filtrate is returned to the crystallizer 1 via a return line 5 by a returning pump. Part of the filterate is purged via a purge line 6 while the crystal contents are discharged as a product via a supply line 7 or after passing through a subsequent other crystallizing means.

The absorption condenser 2 is connected with the crystallizer 1 via a vapor pipe 8 and has indirect cooling means such as multi-tube or plate type heat conducting face which is cooled by coolant or cooling water. The heat conducting face is supplied with a feed solution of organic melt containing a solvent to be condensed.

In the thus formed facility, an adiabatic evaporation and cooling operation of the solvent is conducted in the crystallizer 1. The slurry containing crystals which is formed by this operation is removed from the crystallizer 1 while the vapor is introduced to the absorption condenser 2 via the vapor pipe 8. Condensation of the solvent is carried out by contacting the introduced feed solution of the melt of organic chemicals with the vapor in the absorption condenser 2. The condensate, that is, a mixture of the feed solution with the solvent is introduced to the crystallizer 1 via a feeding line 9. Crystallization is achieved in the crystallizer 1. The concentration of the solvent in the crystallizer 1 is controlled by adjusting the amount of the removed slurry containing crystals and the amount of the returned filtrate liquid (mother liquid).

The crystallizer 1 is operated under a vacuum or evacuated condition. The organic material to be crystallized is mixed with the condensate transferred from the absorption condenser 2 by the agitator 1A. Lowering of pressure due to this mixing causes the solvent to vaporize. At this time, crystallization heat is deprived from the mixture, resulting in that crystals are separated out from the mixture. Slurry which contains the separated crystals is converted into products by the above mentioned process.

The vapor which is generated in the crystallizer 1 is supplied to the absorption condenser 2 via the vapor pipe 8. The vapor is brought into contact with dense feed solution in the absorption condenser 2. Accordingly, an increase in the boiling point occurs and the condensation temperature is elevated.

Fig. 3 shows a second embodiment. Mother liquid which is fed from the solid-liquid separator such as centrifuge 4 is returned to the absorption condenser 2 via a recycle line 11 by a circulating pump 10. In this case, the feed solution is directly supplied to the crystallizer 1.

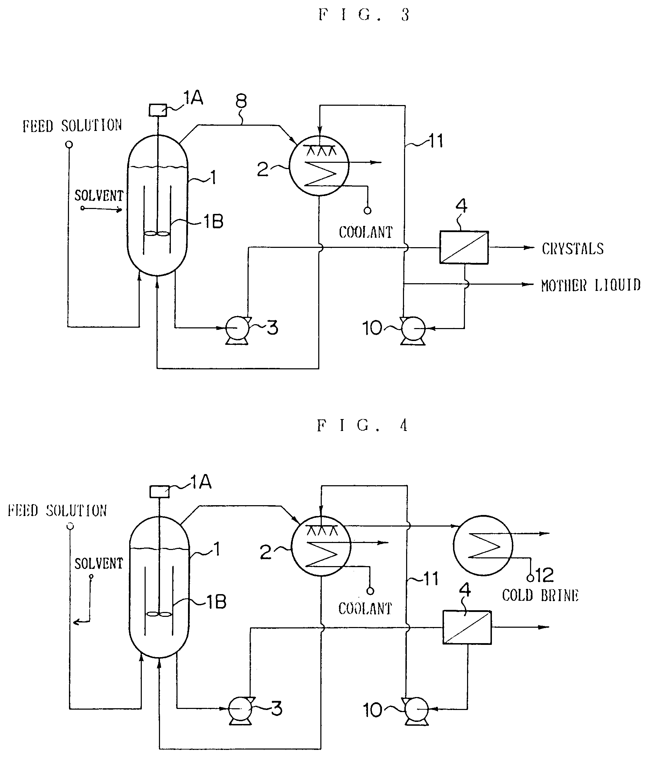

Fig. 4 shows a third embodiment. If the crystallization capacity is insufficient when only the absorption condenser 2 is used, it is preferable to use a usual condenser and/or a cold brine coolant 12. If the absorption condenser 2 is provided for feeding the feed solution, a cold brine may be provided.

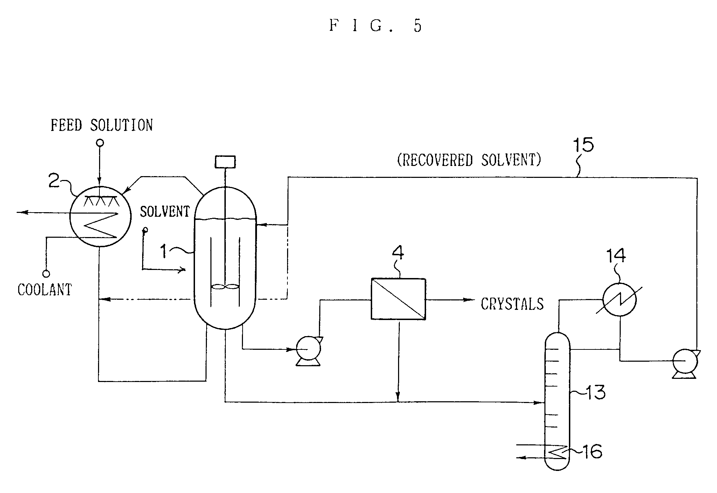

Although the solvent may be preliminarily mixed with the feed solution, the solvent may be preferably charged as shown in Fig. 5 as follows: The filtrate from the centrifuge 4 is introduced to a solvent stripper 13. Vapor from the top of the stripper 13 is condensed by a condenser 14 to recover the solvent. The recovered solvent is supplied to the crystallizer, via a recovered solvent return line 15 or is charged to the supply line from the absorption condenser 2 to the crystallizer 1 as represented by a phantom line.

### EXAMPLE 1

The effects of the present invention will be described by way of examples.

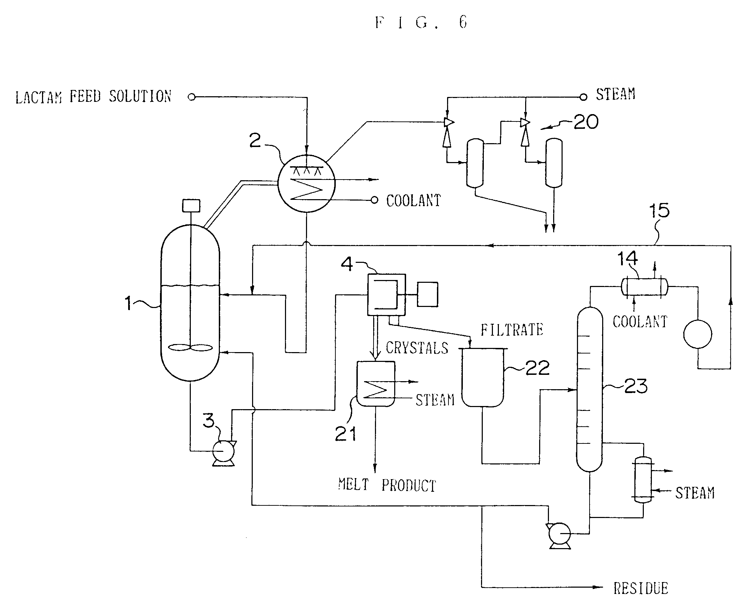

Crystallization was conducted by a process shown in Fig. 6. A reference numeral 20 denotes an evacuating machine; 21 a device for melting slurry containing crystals; 21 a tank for temporarily reserving the filtrate; and 23 a dehydration distillation column.

A vertical cylindrical crystallizer having a diameter of 300 mm and a height of 1.5 m and a hold up volume of 30 liters was used as the crystallizer 1, a shell and tubes type absorption condenser 2 having a heat exchange area of 0.5 m² was used and a centrifuge 4 was used as the solid-liquid separator. The present invention was applied to a lactam-water system in which a refrigerant functions as a solvent for an organic material and the organic material functions as an absorbing agent.

Feed solution having a lactam concentration of 99.0 to 99.2 % and a temperature of 70°C was supplied to the absorption condenser 2 at a rate of about 15 kg/hr, in which it was contact-mixed with vapor from the crystallizer 1 so that the feed solution was condensed at 30°C. The resultant condensate was an aqueous solution of lactam having a water content of 11 to 12 % and it was introduced to the crystallizer which was operated under an operation pressure of 15 to 25 Torrs and at a temperature of 58 to 60 °C to achieve crystallization. Feed solution containing 11.5 kg of crystal content, 67.5 kg of liquid lactam and 2 kg of water was supplied to the centrifuge 4 from the crystallizer 1. Crystals were separated in the centrifuge 4. As a result of this, Lactam crystals were obtained at a rate of about 11.5 kg/hr. Filtrate having a composition of 56 kg of liquid lactam and 2 kg of water was supplied to a dehydration distillation column 23. Liquid lactam was removed from the bottom of the column at 75 °C and 63.5 kg of the lactam was returned to the crystallizer 1. 4 kg of residue liquid was discharged to the outside of the system. The vapor from the top of the column was condensed and was added to the feed to the crystallizer 1 for recovery of the solvent.

### EXAMPLE 2

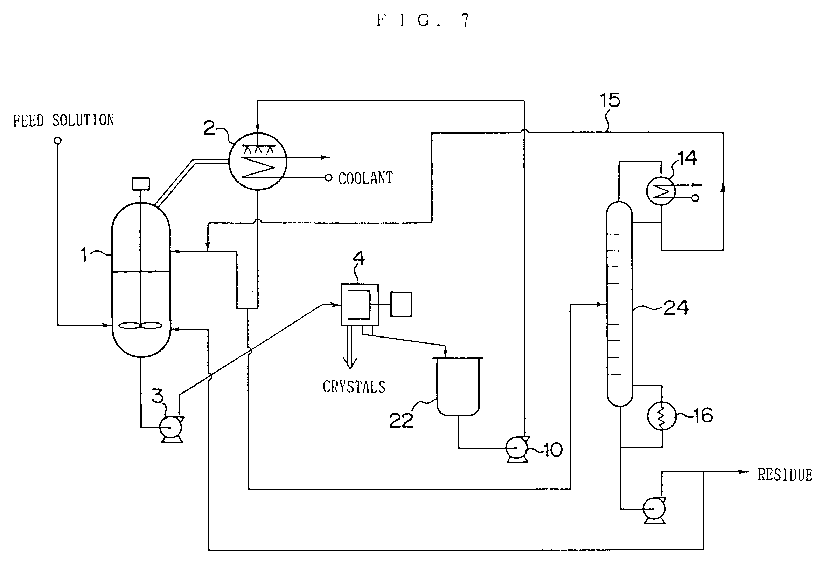

P-dichlorobenzene was crystallized from dichlorobenzene isomers containing liquid by means of a system shown in Fig. 7. A reference numeral 24 denotes a desolvation distillation column. The supplied feed solution was a mixture liquid of three isomers containing dichlorobenzene, p-dichlorobenzene and a small amount of trichlorobenzene. The concentration of p-isomer was 80 to 82 %. Cyclohexane was used as a vaporization refrigerant.

The crystallizer 1 was operated so that the concentration of cyclohexane in mother liquid was 8 to 12 %. Cooling crystallization was achieved by vaporizing the cyclohexane under an evacuated pressure of 25 to 30 Torrs. Crystallization temperature was 25 to 35 °C.

The slurry containing crystals (concentration of solid was 20 to 25 %) which was crystallized in such a manner was supplied to the centrifuge 4 at a rate of 20 to 30 kg/hr and was separated into solid and liquid. Mother liquid which was obtained by the separation was supplied to the absorption condenser 2 at 15 to 20 kg/hr to absorb the vapor from the crystallizer 1 and simultaneously cooling was conducted. The resultant condensate had a temperature of 15 to 20 °C and a cyclohexane concentration of 20 to 25 %. The separated mother liquid in the centrifuge 4 was 60 to 68 % in concentration of p-dichlorobenzene.

In accordance with the present invention, crystallization facility can be implemented by only a crystallizer and an absorption condenser. Cost of facility and operation for the same can be remarkably reduced.

## Claims

1. A process for crystallizing a melt with adiabatic cooling comprising the steps of:
conducting an adiabatic evaporation and cooling of a solvent from the melt of organic chemicals to be crystallized containing the solvent in a crystallizer;
removing from the crystallizer, resultant slurry containing crystals which is formed by the vaporization of the solvent;
introducing resultant vapor from the crystallizer to the absorption condenser;
introducing to an absorption condenser feed solution of said melt of the organic chemicals to achieve absorption-condensation of the vapor by bringing the feed solution into contact with said introduced vapor therein; and
introducing resultant absorbed condensate to said crystallizer.

2. A process for crystallizing a melt with adiabatic cooling as defined in Claim 1 and further including the step of separating the slurry containing crystals which is removed from said crystallizer into liquid and solid; and
returning the separated mother liquid to the crystallizer.

3. A process for crystallizing a melt with adiabatic cooling as defined in Claim 1 and further including the steps of separating said slurry containing crystals which is removed from said crystallizer into liquid and solid;
recovering the solvent from the separated mother liquid; and
feeding the recovered solvent to said crystallizer or to a supply line for the melt of the organic chemicals leading from the absorption condenser to the crystallizer.

4. A process for crystallizing a melt with adiabatic cooling comprising the steps of:
conducting an adiabatic evaporation and cooling of a solvent from a melt to be crystallized containing the solvent in a crystallizer of organic chemicals by directly supplying the melt thereto;
removing from the crystallizer, resultant slurry containing crystals which is formed by the vaparization of the solvent;
separating the slurry containing crystals which is removed from the crystallizer into solid and liquid;
introducing a part of or all of the separated mother liquid to an absorption condenser to achieve absorption condensation of the vapor by bringing it with said introduced vapor therein; and
introducing resultant absorbed condensate to said crystallizer.

5. A process for crystallizing a melt with adiabatic cooling as defined in Claim 4 and further including the steps of removing a part of the absorbed condensate introduced from the absorption condenser to the crystallizer for recovering the solvent; and
supplying the recovered solvent to the crystallizer.

6. An apparatus for crystallizing a melt of organic chemicals comprising
a crystallizer for conducting an adiabatic evaporation and cooling of a solvent which is contained in the melt of organic chemicals to be crystallized;
means for drawing out the slurry containing crystals from the crystallizer which is generated by the vaporization; and
an absorption condenser for absorption-condensing vapor introduced from said crystallizer by bringing the vapor into contact with introduced feed solution of said melt of the organic chemicals, whereby to introduce the absorbed condensate to said crystallizer.
